Europäisches Patentamt

European Patent Office

Office européen des brevets

(11) Publication number: **0 416 519 A2**

# EUROPEAN PATENT APPLICATION

(21) Application number: **90116932.6**

(22) Date of filing: **04.09.90**

(51) Int. Cl.5: **G03B 27/52, G03C 11/02**

(30) Priority: **05.09.89 JP 230225/89**
 **20.09.89 JP 246012/89**

(43) Date of publication of application:
 **13.03.91 Bulletin 91/11**

(84) Designated Contracting States:
 **DE GB**

(71) Applicant: **KONICA CORPORATION**
 **26-2, Nishi-shinjuku 1-chome Shinjuku-ku**
 **Tokyo(JP)**

(72) Inventor: **Yamanouchi, Kenji**
 **c/o Konica Corporation, 1 Sakura-machi,**
 **Hino-shi**
 **Tokyo(JP)**
 Inventor: **Ikeda, Makoto**
 **c/o Konica Corporation, 1 Sakura-machi,**
 **Hino-shi**
 **Tokyo(JP)**

(74) Representative: **Türk, Gille, Hrabal**
 **Brucknerstrasse 20**
 **W-4000 Düsseldorf 13(DE)**

(54) **Silver halide photographic light-sensitive material and photographic light-sensitive material identification code printer.**

(57) A silver halide photographic light-sensitive material, including; a bar code latent code image, exposed on an outer edge ares of the photographic film for identifying the film product kind, and another bar code latent code image for identifying the picture flame number on both of the outer edge areas, which are outside of the picture flame areas, in the longitudinal direction of the film.

## F I G. I

FRAME NUMBER IDENTIFICATION CODE
(FRAME NUMBER BAR CODE)

PRODUCT KIND AND FRAME NUMBER
IDENTIFICATION CODE

FRAME NUMBER

EP 0 416 519 A2

# SILVER HALIDE PHOTOGRAPHIC LIGHT-SENSITIVE MATERIAL AND PHOTOGRAPHIC LIGHT-SENSITIVE MATERIAL IDENTIFICATION CODE PRINTER

## BACKGROUND OF THE INVENTION

The present invention relates to an apparatus for printing bar codes for identifying the product kind (including the product name, maker name, etc.) and frame numbers on a silver halide photographic light-sensitive material (hereinafter may be called a photographic material or a film for simplicity) as latent images.

In the case of a general photographic color film, especially a 135-type photographic color film, the product kind and each frame number are printed on the outer edges in the outside area of each frame in the longitudinal direction of the film as a latent image.

By reading the product kind code representing the product name and maker name from the developed code on the developed negative film and applying the specified exposure conditions to the printer with the intrinsic performance of the manufacturer and product, most suitable finishing can be always provided.

Since each frame of the developed film is provided with its number as a developed image, the image of a desired frame can be printed by specifying the corresponding frame number.

In this procedure, the frame number whose image is to be printed is required to be specified by looking through the negative film for ordering. This is considerably troublesome.

It is unusual at present to develop a negative film first and to look at the developed negative film to find desired frames for ordering. A simultaneous printing system that a film is developed and the images of the frames of the developed film are all printed one by one is generally used. When reordering printing, the customer who receives the film specifies the frame numbers of the developed negative film corresponding to the desired images for reprinting.

If the frame number is printed on the back of a hard copy, the orderer and the order receiver need not read the frame number by comparing with the negative film, resulting in easy handling. Therefore, there are increasing requests for recording the frame number on each print.

It is desirable, therefore, that patterned information (hereinafter may be called a code for simplicity) such as a bar code is printed on a photographic material beforehand and when the printer reads the information during hard copy, the corresponding frame number (numeral) is printed on the back of a hard copy. It is useful to print a code on the outer edge of a photographic material instead of the picture plane.

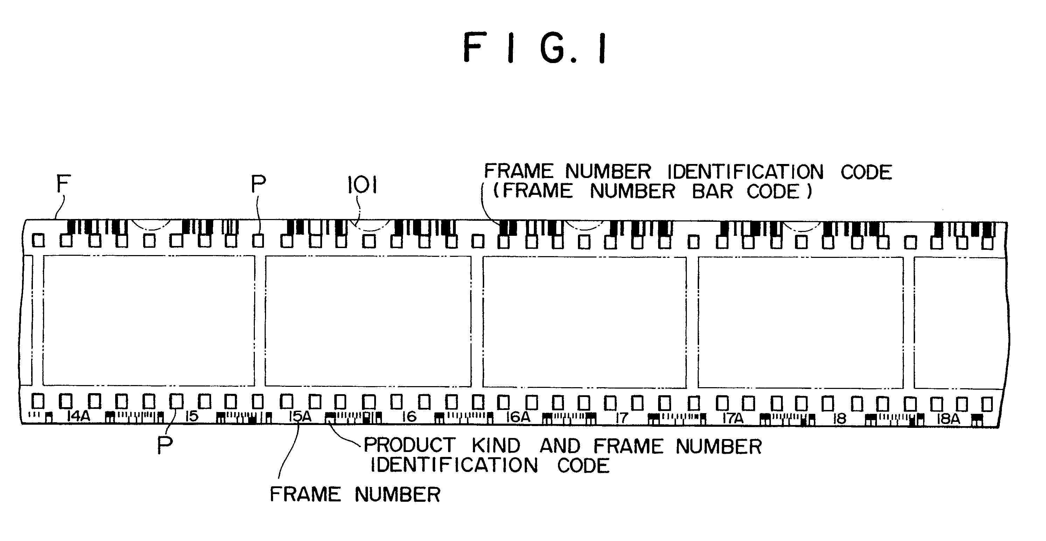

When a photographic material is developed, a side notch 101 shown in Fig. 1 is generally formed on the outer edge on one side of each frame of the developed photographic material.

The side notch 101 is used to set each frame of a developed photographic material at the correct location of the printer for generating hard copy. At present, such a side notch 101 is formed on one outer edge of a photographic material, and the selected side varies with each print system. When the side notch 101 is formed in the frame identification frame number code area instead of the product kind identification code (which is common to all the frames) area, a part of the frame number code is cut off, causing the printer to misread frame numbers.

Therefore, to print the correct frame number (numeral) on the back of a hard copy without a malfunction independently of the side on which the side notch 101 is formed on the outer edge, it is desirable that the frame number bar codes are printed on the outer edges on both sides of a photographic material instead of one side. In the case of a 135-type roll film, however, the DX code is printed on one outer edge as a product kind code representing the maker and product names, and each frame number bar code cannot be printed independently on the side where the DX code is printed. Therefore, it is necessary that each frame number bar code is combined with the DX code and a composite bar code representing the product kind and the frame number is printed.

The maximum number of such composite bar codes required for each manufacturer is 16 x 80 = 1280 on the assumption that the number of product kinds for planning sales is 16 and the number of frames is 80 including 1 to 36 and 1A to 36A + alpha. When the printing method uses negative or positive films, for example, the manufacturer requires 1280 types of negative or positive and spare films, resulting in an increase in the negative or positive film production cost, complicated management, and a troublesome switching operation.

When the printing method is a dot image generation method, the storage of 1280 types of data requires a large memory capacity, resulting in a complicated apparatus and an increase in cost.

The object of the present invention is to provide a printer which facilitates bar code production, maintenance, and management, minimizes the storage capacity, and reduces the apparatus cost by solving those problems.

## SUMMARY OF THE INVENTION

This object is accomplished by one of the technical means indicated below.

(a) A silver halide photographic light-sensitive material characterized in that the photographic material has codes for identifying the product kind on at least one of both outer edges thereof in the longitudinal direction and codes for identifying frame numbers on both outer edges as latent images

(b) A silver halide photographic light-sensitive material according to (a), wherein at least one of latent images for forming the above codes is formed by generating pixels by a dot image generator

(c) A silver halide photographic light-sensitive material according to (a), wherein the above codes are all formed on a negative or positive film and latent images are formed by projecting or contact-exposing the film to the silver halide photographic light-sensitive material

(d) A silver halide photographic light-sensitive material according to one of (a), (b), and (c), wherein codes for identifying the above frame numbers are formed in different patterns for the same number

(e) A light-sensitive material identification code printing method, which generates pixels by a dot image generator and forms identification codes on the outer edges of a light-sensitive material as latent images, characterized in that the top of the pixels formed by the dot image generator on the outer edge side of the light-sensitive material is outside the edge line of the light-sensitive material

(f) A light-sensitive material identification code printing method, which forms identification codes on the outer edges of a light-sensitive material as latent images using a negative or positive film, characterized in that the top of the code images formed by exposure through the film on the outer edge side of the light-sensitive material is outside the edge line of the light-sensitive material

(g) A light-sensitive material identification code printing method, which forms codes for identifying the product kind on at least one of both outer edges of a light-sensitive material in the longitudinal direction and codes for identifying frame numbers on both outer edges as latent images using a negative or positive film, characterized in that negative or positive films for codes on both outer edges are separately formed and wound round one exposure member so as to use for exposure

(h) An identification bar code printer for a silver halide photographic light-sensitive material, which is a latent image printer for printing identification bar codes representing the product kind including the maker name and product name and frame numbers on a light-sensitive material by transmitted light from a negative or positive film, characterized in that a code which includes at least one meaningful code of the bar codes is divided into a plurality of parts by a boundary line between a predetermined bar and a blank space and printed

(i) An identification bar code printer for a silver halide photographic light-sensitive material, which is a latent image printer for printing the identification bar codes on a light-sensitive material by generating dot images, characterized in that a code which includes at least one meaningful code of the bar codes is divided into a plurality of parts by a boundary line between a predetermined bar and a blank space, a storage holder means for recording and holding each data and a storage holder means for recording and holding the printing location on the photographic material corresponding to each data are provided, and the identification bar codes are printed by setting the location data to a predetermined value

## BRIEF DESCRIPTION OF THE DRAWINGS

Fig. 1 shows a layout drawing of identification codes to be printed on a photographic material.

Figs. 2(a), (b), (c), (d), and (e) show examples of frame number codes and comparison diagrams with frame numbers.

Fig. 3(a) is a schematic view of an identification code comprising a product kind code and frame number code.

Fig. 3(b) shows dimensional relationship between dot image bars or negative or positive film bars and the film edge line.

Fig. 4 is a schematic view of a printer of identification codes using the dot image generation method.

Fig. 5 shows a diagram showing torque characteristics of a torque motor.

Figs. 6(a) and (b) show diagrams for explaining the principle of writing data in a memory.

Fig. 7 shows a print timing chart.

Fig. 8 is a side view showing the printing location on a photographic material on a sprocket.

Figs. 9(a) and 9(b) are perspective views of an apparatus for printing an identification code on a photographic material by projecting a negative or positive film which is divided into two parts.

Figs. 10(a) and 10(b) are perspective views of an apparatus for printing an identification code on a photographic material by projecting a negative or positive film which is not divided into two parts.

Fig. 10(c) is a perspective view of an apparatus for printing an identification code on a photographic material on the drum with a negative or positive film in contact.

Fig. 11 is a plan view of another embodiment showing division of a negative or positive film of bar codes.

Fig. 12 is a plan view showing cut lines for a long film and unit films.

## DETAILED DESCRIPTION OF THE INVENTION

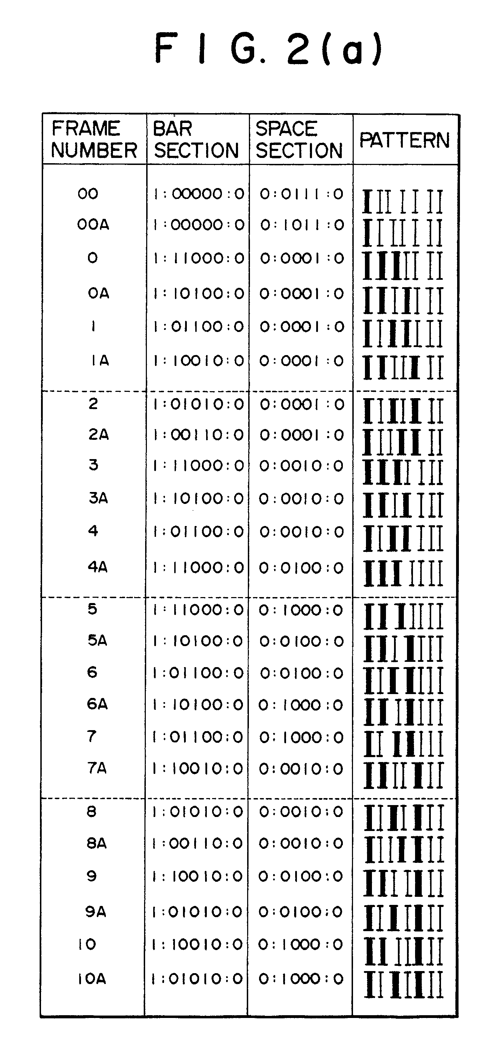

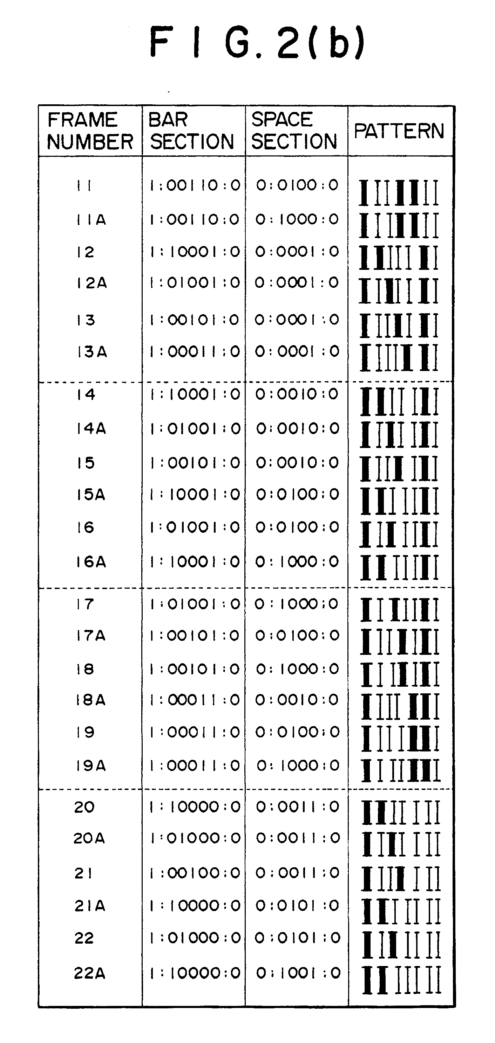

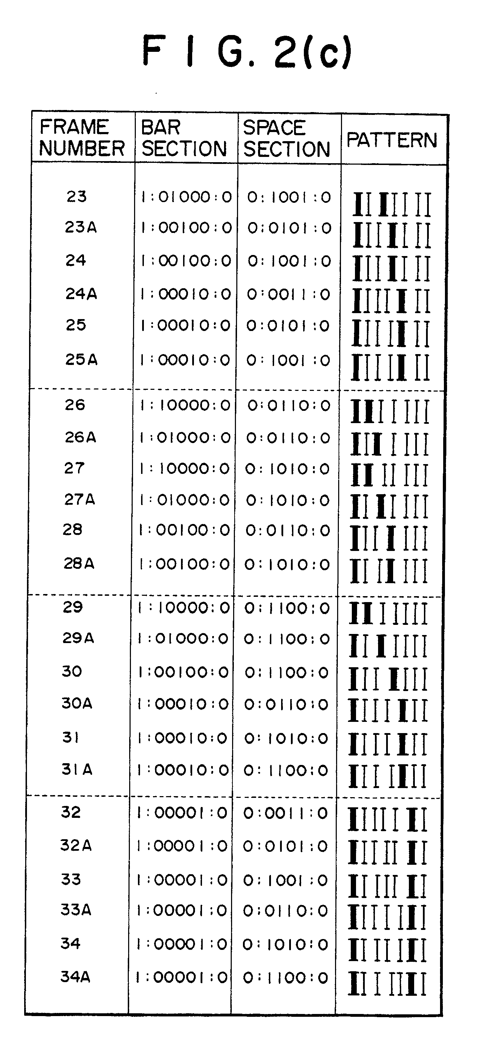

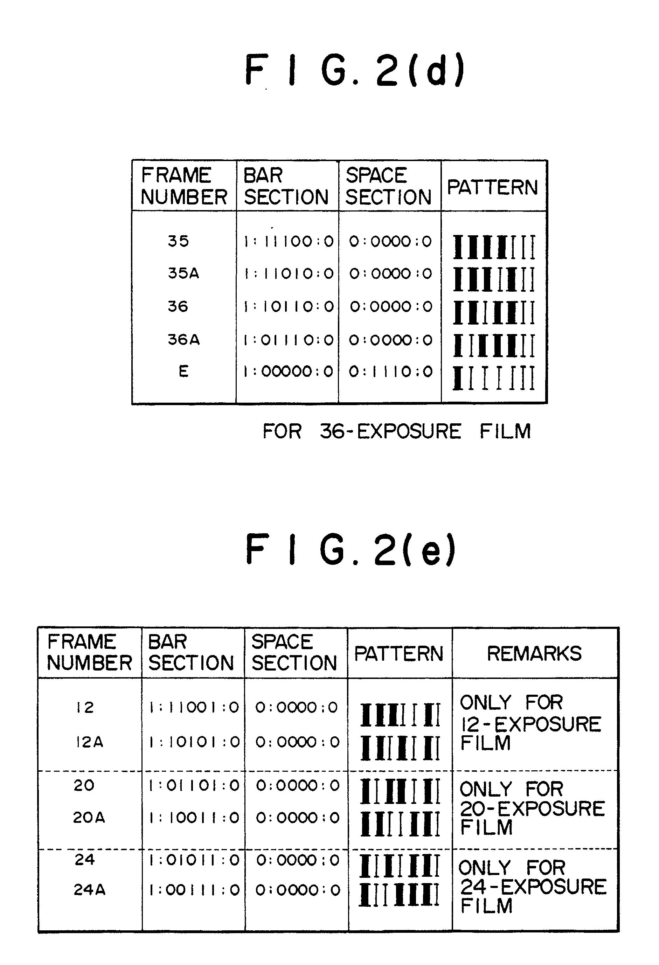

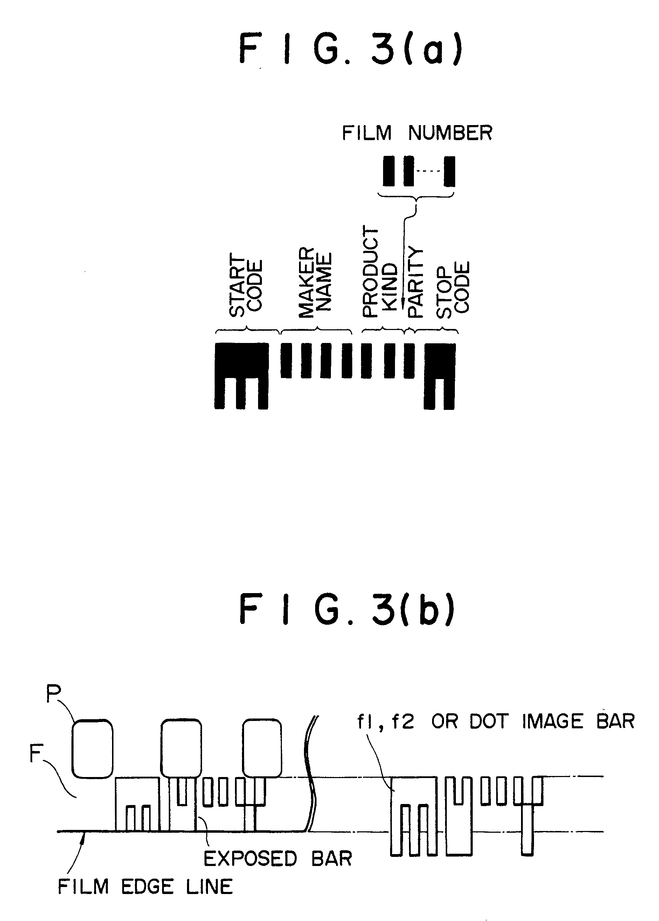

Fig. 1 shows a schematic view of identification codes and frame numbers which are printed on a silver halide photographic light-sensitive material F (hereinafter may be called a photographic material or a film for simplicity), which is an embodiment of the present invention, during manufacture, Figs. 2-(a), (b), (c), (d), and (e) show examples of frame number codes and comparison diagrams with the corresponding frame numbers, and Fig. 3 shows a schematic view of a bar code comprising a product kind code and frame number code.

The photographic material of this embodiment is a 135-type color negative film which has perforations P formed on the outer sides of the photographic image frames indicated by two-dot chain lines on the center part thereof and frame number codes printed on one outer edge of the frames according to the comparison diagrams of frame number codes and frame numbers shown in Figs. 2(a), (b), (c), (d), and (e). On the other outer edge, frame numbers comprising numerals and alphabetic symbols are printed at a frame pitch. Between frame numbers, as shown in the schematic view of Fig.3(a), bar codes comprising product kind codes and frame number codes are printed by using several bars inserted in the area of the arrow between the product kind code and parity code of the conventional DX code. It is more preferable that frame numbers are printed between neighboring frame number codes printed on one outer edge.

A means is used in this embodiment that an image is photographed in each frame of the photographic material F indicated by a two-dot chain line shown in Fig. 1, a side notch 101 indicated by an alternate long and short dash line shown in Fig. 1 is formed and cut off on one outer edge of the frame after the image is developed, and the negative image can be positioned correctly and easily thereby for printing.

This side notch 101 can be formed correctly in the center of each photographic image frame, and each side notch 101 shown in Fig. 1 happens to be in the center of each frame number code, so that no part of the bar code is not cut off. When the side notch 101, however, is formed at the corresponding location (in the center of the photographic image) on the opposite outer edge, a part of the bar code for the product kind and frame number, especially a part or the entire of the frame number bar code is cut off. If this occurs, each photographic image is formed at an optional location depending on the initial loading status of a camera independently of the symbol location of those printed codes and numbers.

Therefore, when frame number codes and frame numbers are printed on one outer edge of the photographic material F and side notches are formed on the same side, the possibility is comparatively high that a part of the frame numbers and frame number codes is cut off. Especially when a frame number code is cut off, the code cannot be read when printing the corresponding frame number on the back of a hard copy, thus the frame number cannot be printed or is printed incorrectly. When the frame number code is not cut off though the frame number is cut off, the frame number can be printed on the back of a hard copy. However, when the frame number is not found on the outer edge because it is cut off, it is extremely inconvenient when reprinting is requested by looking at the film but not the hard copy.

In this embodiment of the present invention, the frame number codes and frame numbers can be always read independently of the outer edge side where the side notches 101 are formed because the frame number codes and frame numbers are printed on both outer edges of the photographic material F. The bar code representing the product kind is printed on one side because it is the same for each frame and will cause no problems even if it is cut off by the side notch 101. The frame number codes may be the same or different on both outer edges. In this embodiment, the latter is used. In a system that images are printed with no side notches 101 formed, the bar codes on both sides can be detected simultaneously. When the system has different bar codes on both sides, it may be useful for error check.

The bar code configuration may be a system of "2 out of 5" or others. This embodiment uses the codes shown in Figs. 1, 2, and 3. Needless to say, however, another codes may be used.

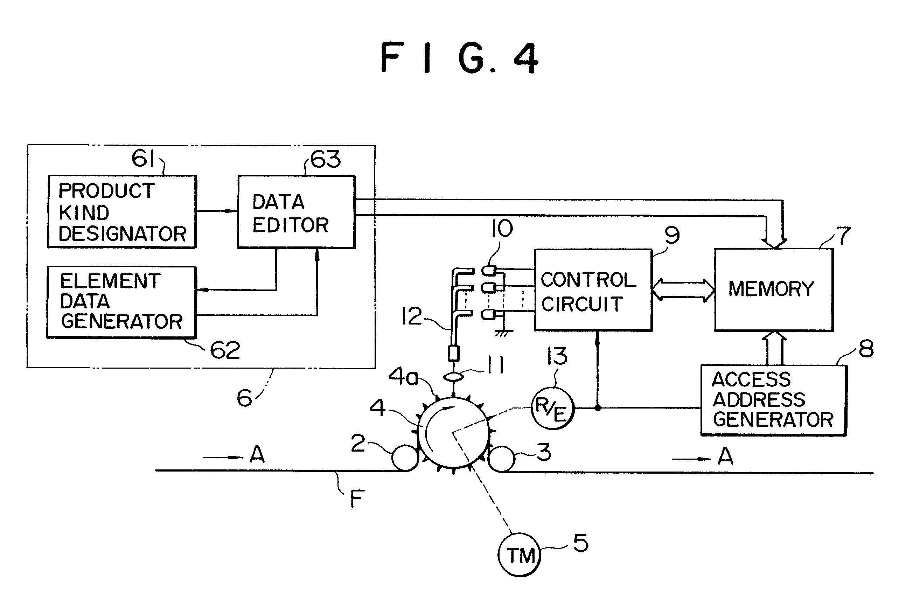

Next, an apparatus for printing an photographic material identification code on the photographic material F which uses the dot image generation method will be described hereunder with reference to the schematic view shown in Fig. 4.

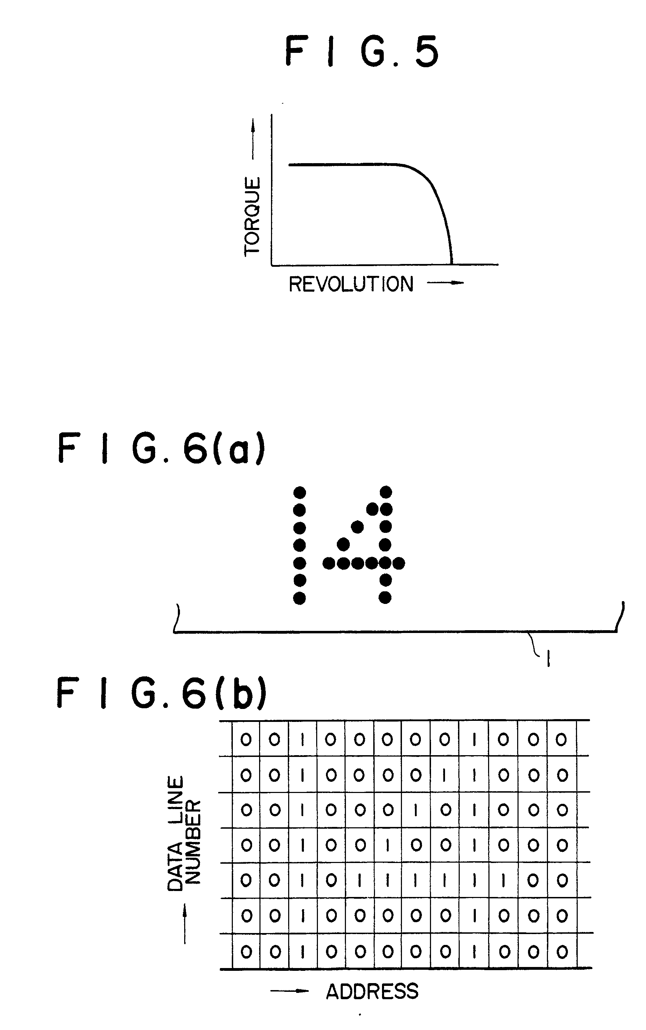

A photographic material (hereinafter may be called a film for simplicity) F is transferred in the direction of the arrow A at a predetermined speed by being wound round a sprocket 4 under control of guide rollers 2 and 3. In this case, feed holes of the film F are hooked by pawls 4a of the sprocket 4. The shaft of the sprocket 4 is connected to a torque motor 5. The torque motor 5 has the torque characteristics shown in Fig. 5, and rotational force is provided to the sprocket 4 by the motor 5 in the opposite direction to the film transfer direction so as to apply stable back tension to the sprocket 4. Therefore, each pawl 4a of the sprocket 4 is hooked at the edge of each feed hole of the film F on the opposite side to the feed direction, and the film F is transferred correctly at the transfer speed in the state that the film F is fixed to the surface of the sprocket 4 by the tension toward the downstream. The tension of the torque motor 5 may be used as forward tension instead of back tension. Tension may be applied by a powder brake, but a motor which can apply a tension during the suspension is preferable.

Numeral 6 indicates a data input device which comprises a product kind (sensitivity, brand, size, etc.) designator 61, an element data generator 62 for generating letter data and character data, and a data editor 63. Data edited by the editor 63 is written in memory 7 comprising RAM or the like.

There are only about 16 types of product kind bar codes representing the maker name and product name available. When one type is specified, it is common to every frame number and the product kind code can be written and stored independently in a part of the memory 7 comprising RAM or the like. There are about 80 types of bar codes, as mentioned above, which are frame number bar codes connected with parity and stop codes, and they are independently written and stored in a part of the memory 7.

When a bar code to be printed on each frame of a film is divided and stored as mentioned above, and read and printed at each corresponding frame location of the film, the storage amount can be reduced to about 96 types by combining the foregoing independent bar codes one by one for processing. If the bar codes, which are not divided, are stored in the memory 7, it is necessary to write 16 x 80 = 1280 types of bar codes in a part of memory 7.

In this embodiment, the number of divided meaningful codes is 2. However, the number of divided codes may be more than 2.

In this embodiment, each dividing line is a boundary line between the bar and a blank space to keep the bar code accuracy. Each boundary line is managed by the storage holder for recording and holding the printing location on the photographic film F so as to be accurately printed at the correct location.

The present invention provides a simplified apparatus which minimizes the bar code storage capacity of the RAM or others and reduces the production cost of the dot image writing and reading device. Data, which is written in the memory, is addressed and read by a signal from an access address generator 8, latched by a control circuit 9, and printed on the film F by a printing device when a print timing pulse is received.

This printing device comprises a LED group 10 comprising a plurality of LEDs which are independently turned on or off by the control circuit 9 and a fiber light guide member 12 for individually guiding light from each LED to a lens 11. The terminals of the light guide member 12 are lined, for example, at a pitch of several millimeters. This lining direction is perpendicular to the film F transfer direction. When the film F is located on the sprocket 4, dot images are printed on it in synchronization with the transfer.

Numeral 13 indicates a rotary encoder which is connected to the shaft of the sprocket 4 and detects the rotation thereof, and the access address generator 8 outputs an address signal by a pulse from the encoder 13. The control circuit 9 also outputs a light emission command pulse (print timing pulse) by a signal from the encoder 13.

Next, the operation will be described hereunder.

(1) Writing data in the memory 7

Data of all the printing locations in the longitudinal direction (printing data line) of the film F to be printed is written in the memory 7, as shown in Figs. 6(a) and (b), in correspondence to the film length (which varies with the number of exposures, such as 12, 24, or 36 exposures). Symbols and others are generally printed at a predetermined pitch or at several locations. In this embodiment, however, dot information "1" is written in the address parts of the memory corresponding to the locations where the symbols and others are to be written, and dot information "0" is written in the other address parts. By doing this, data of all the data printing parts of the film from the start point to the end point in the longitudinal direction is written with "1" or "0" in the memory 7 in the address sequence.

This operation is performed by a write data input device 6. When a plurality of printers are installed, one data input device 6, which is structurally separable, can be shared by those printers.

During read, the addresses stored in the memory 7 can be accessed in the address sequence for each predetermined pitch transfer by counting transfer detection pulses from the rotary encoder 13. Therefore, addressing the memory 7 requires no CPU or software, the access address generator 8 can comprise simple hardware, and the reading speed can be increased.

(2) Printing

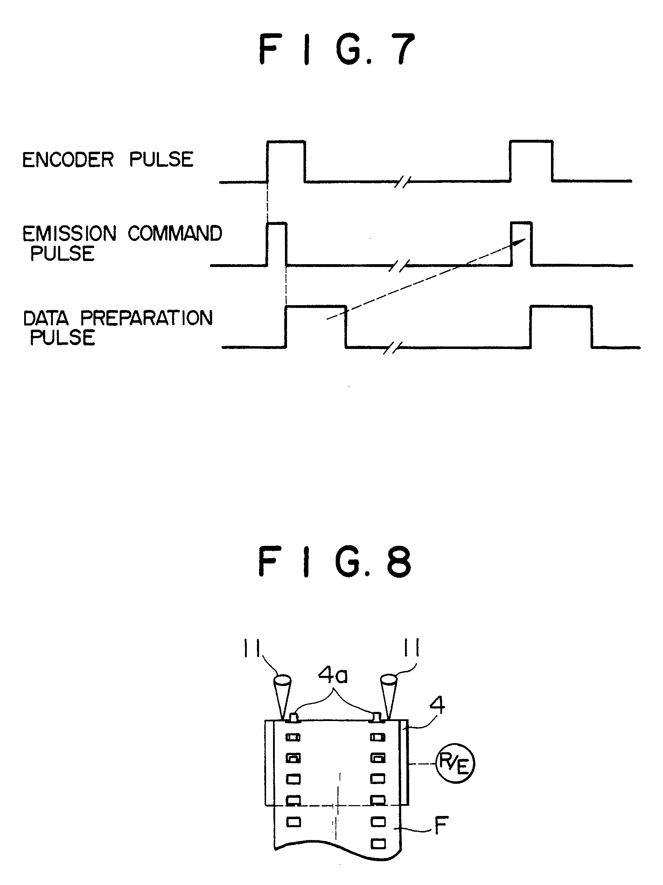

In this embodiment, data to be printed later is read from the memory 7 beforehand, latched in the control circuit 9, and printed when a printing command pulse for the data is received. Fig. 7 shows the timing chart thereof. The data preparation pulse is used to latch the data read from the memory 7 in the control circuit 9.

For printing, a predetermined LED of the LED group 10 is selected and emits light. The emitted light is condensed by a lens 11 via the light guide member 12 and irradiated to the film F on the sprocket 4 for exposure. When the latched data is all bit information "0", no data is printed even if the printing command pulse is received. In this way, symbols of dot images are printed on the film F. Latent images formed by exposure are developed simultaneously when the film F is developed by the user who purchases it.

Since the present invention, as mentioned above, uses a method of preparing data to be printed beforehand, the time required for reading data from the memory 7 does not affect the printing time, no problems are imposed when the film F is transferred at a high speed, and the printing location can be managed accurately.

The printing operation is performed on the sprocket 4. Pawls 4a are formed, as shown in Fig. 8, on both sides of the sprocket 4, and data can be printed simultaneously on the outer sides of both pawls 4a. In this case, back tension is applied to the sprocket 4, and data is printed accurately at the printing location.

When a plurality of sprockets are used in the film transfer system and the film is tensioned between neighboring sprockets, data can be printed on that part with high positional accuracy. Thus, bar codes and numerals can be printed satisfactorily on the photographic material (film) F by a printer using the dot image generation method.

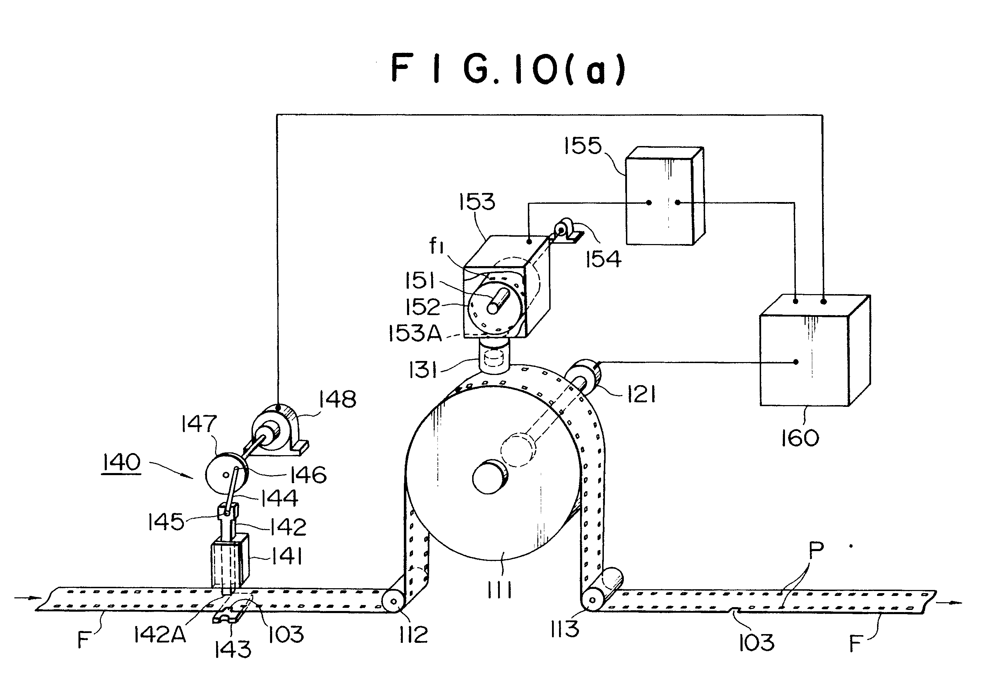

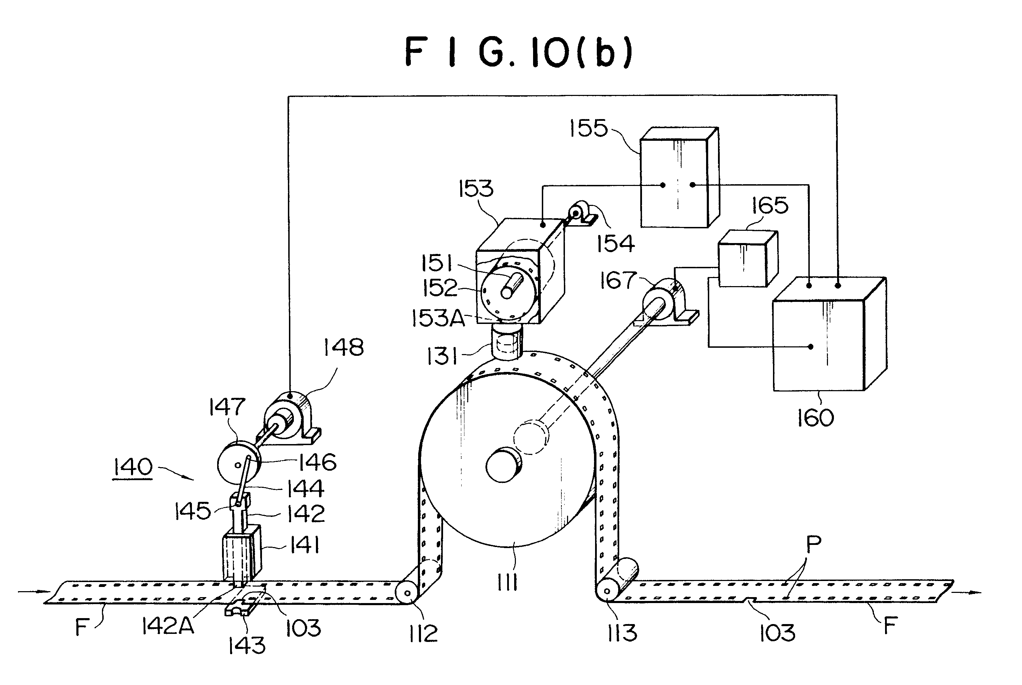

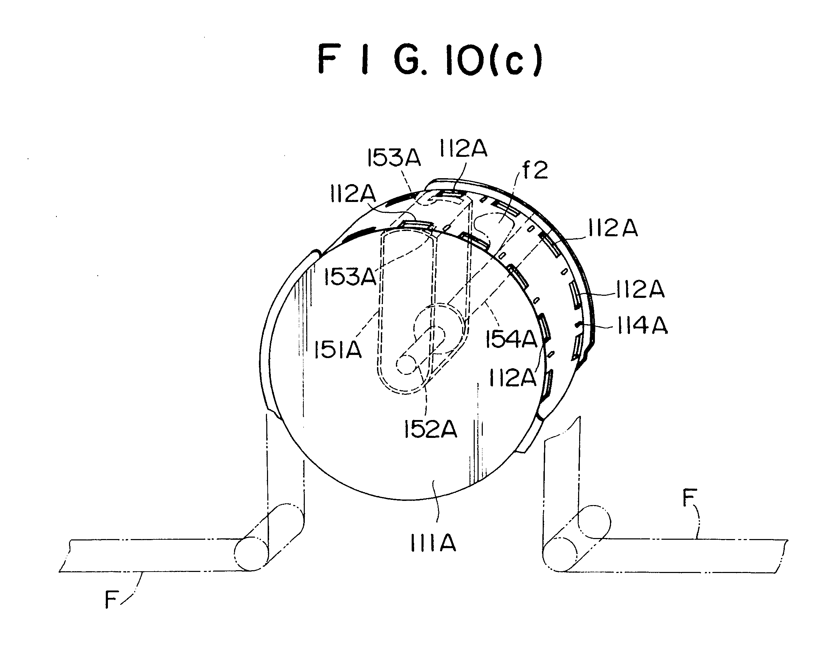

Next, an apparatus, which records frame number identification codes, product kind identification codes, and characters on a negative or positive film and prints them on a silver halide photographic light-sensitive material by exposing the negative or positive film by projection, will be described hereunder with reference to Figs. 10(a) and 10(b). Firstly, Fig. 10(a) will be described.

A photographic material (long photographic film) F, which is 35 mm in width and has perforations on its sides, is fed from the left in Fig. 10(a), conveyed to a puncher 140 and then to a feed drum 111 via a guide roller 112, sent to the right in the figure via a guide roller 113, and wound there (no take-up reel is shown). For a film with 135-type perforations, a sprocket drum may be conveniently used as a feed drum 111.

An encoder 121 is directly connected to the feed drum 111, and used to detect the rotation angle of the drum and to pick up the feed amount of the film by the drum.

This encoder 121 may be either an optical or magnetic encoder.

A signal from the encoder 121 is supplied to a counter 160 which outputs a signal for each predetermined feed amount. The signal is supplied to a control unit 155 for a printer of numerals, alphabetic characters, and symbols such as bar codes. In synchronization with the film feed amount, a printer drum 152 selects characters and symbols, and a stroboscopic light source 151 emits light.

Necessary characters and symbols are printed at predetermined locations of the outer edges of the film on the feed drum by an optical system 131.

There are various types of printer drums available. In this embodiment, necessary characters and symbols are sufficiently contained in a negative or positive film f1 attached onto the drum, a stepping motor 154 is operated by a signal from the counter 160 to allow the printer drum to selectively rotate to the location where the necessary characters and symbols are to be set, and the characters and symbols are printed by exposure on the outer edges of the film on the feed drum 111 by the optical system 131 through an exposure window which is formed at the location on a light shield box 153 where the optical axis is formed.

This optical system may use a fiberscope besides the lens system as in this embodiment or a focusing light transmitter.

As shown in another example in Fig. 10(b), when a method that the feed drum 111 is driven by a drive unit 167 which is operated by a drive pulse from a drive pulse generation control unit 165 is used, the encoder 121 is not required. The rotation of the drum 111 or the film feed amount by the drive unit 167 is determined according to the pulse number. A drive pulse from the drive pulse generation control unit 165 is supplied to the drive unit 167 and the counter 160. According to a predetermined count, characters and symbols to be printed on the film F on the feed drum 111 are selected, and the light emission timing and interval and the printing location interval on the film are determined. A length measurement notch 103, which is formed at each pitch of one roll film, simultaneously can be formed at a predetermined interval according to the predetermined count. A pulse motor may be used more preferably as a drive unit 167.

Next, an apparatus for contact-printing a negative or positive film f2, on which characters and symbols are arranged, on a photographic material F will be described hereunder with reference to the perspective view in Fig. 10(c).

A negative or positive film for contact exposure corresponding to the photographic material with symbols and characters printed shown in Fig. 1 is wound round the peripheral surface of a printer drum 111A. An exposure window 112A is formed on the peripheral surface of the printer drum 111A in correspondence with each character or symbol. The drum 111A contains an exposure cylinder 151A fixed to a rod 154A which is inserted and fixed to the frame of the main unit inside the rotation bearing of the drum. A light source lamp 152A is mounted inside the exposure cylinder, and an exposure window 153A is formed on the top of the cylinder in correspondence with the exposure window 112A on the drum 111A for characters and symbols. On the drum surface, pawls 114A are mounted in correspondence with perforations P for correct positioning of a photographic material F.

When the photographic material F is fed by this printing drum 111A in this way, characters or symbols on the negative or positive film are printed onto the photographic film by direct contact whenever the exposure window 112A on the peripheral surface of the drum matches the exposure window 153A if the exposure cylinder 151A.

Such an apparatus requires many negative or positive films depending on the product kind and film length. To reduce the number of required negative or positive films as many as possible, it is desirable to set separate films on both sides of the drum.

Each outer edge of such a photographic material (film) F on which codes are printed is an area with a narrow width. If the film F meanders during printing, printed codes are mislocated in the width direction. Such a phenomenon may cause a code sensor mounted at a predetermined location to misread codes.

To solve such a problem, in the case of a printer using the dot image generation method shown in Fig. 4, each bar code is printed so that the top thereof on the outer edge is outside the edge line of the photographic material F. By doing this, even if the photographic material meanders slightly during printing, each bar is printed fully up to the edge line, preventing the bar from being discontinued near the edge line. Therefore, misreading of each bar code is prevented.

Also in a printer for printing bar codes to a photographic material (film) F by exposing a bar code negative or positive film f1 shown in Figs. 10 and 10A by projection, each bar code of the film f1 is printed so that the top thereof on the outer edge is outside the edge line of the photographic material F as shown in Fig. 3(b).

Also in a printer for printing bar codes to a photographic material F by exposing a bar code negative or positive film f2 shown in Fig. 10(c) by contact, each bar code of the film f2 is printed so that the top thereof on the outer edge is outside the edge line of the photographic material F as shown in Fig. 3(b).

By doing this, in the same way as a printer using the dot image generation method, even if the photographic material meanders slightly during printing, each bar is printed fully up to the edge line, preventing the bar from being discontinued near the edge line. Therefore, misreading of each bar code is prevented.

These printed codes are developed, for example, as shown in Fig. 1.

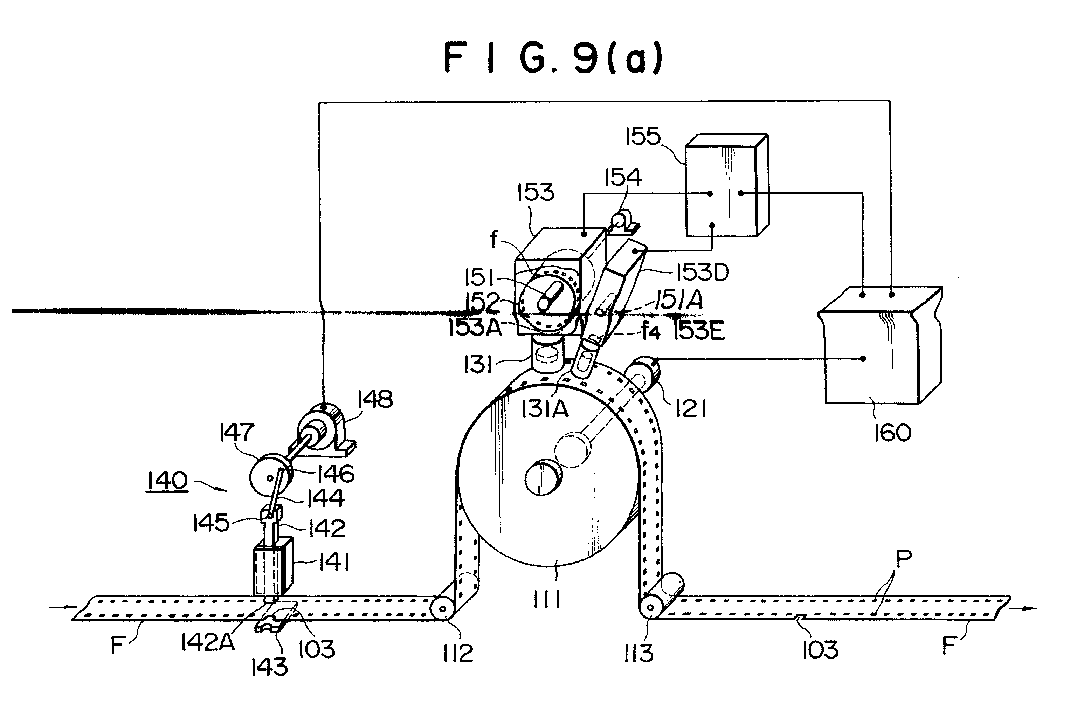

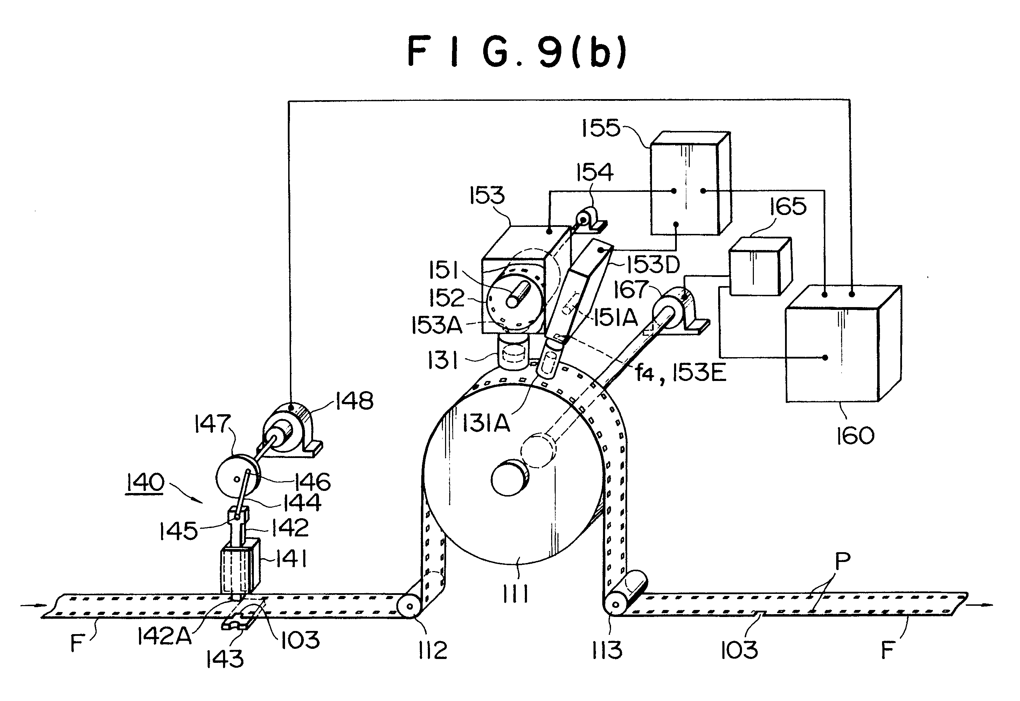

One of the separate negative or positive films, which are used for both sides of the drum, are films with a bar code which is composed of a product kind code and a frame number code. Even if separate films are used, 1280 types of negative or positive films with composite bar codes are required, and the management thereof is complicated and troublesome. In the present invention, the composite bar code of the negative or positive film f1 attached on the printer drum 152 shown in Figs. 10(a) and 10(b) is replaced with a divided frame number bar code or a bar code of a negative or positive film F3 which is the frame number code connected with a parity and a stop bar code, and the printer drum 152 prints only the bar code of the film f3. A bar code for the product kind (maker and product names) code is printed and composed together with the start bar code at another location of the feed drum by a product kind code film f4. Figs. 9(a) and 9(b) are perspective views showing such relations. A light shield box 153D which is provided with the product kind code film f4 at an exposure window 153E and a stroboscopic light source 151A therein is installed so that an image of the bar code at the connection end of the film f4 is printed by an optical system 131A at the printing location at a distance of a constant multiple pitch from the location of the connection end of the bar code which is printed on the film F on the feed drum via an exposure window 153A of the light shield box 153 containing both the printer drum 152, with the film f3 attached thereon and the stroboscopic light source 151, and the optical system 131.

The stroboscopic light sources 151 and 151A emit light in synchronization with each other, though 151A is controlled by the control unit 155 so as to simultaneously emit light the constant multiple pitch time late for 151.

It is necessary that each divided independent bar code is connected and composed without being shifted. The dividing line is a boundary line between a predetermined bar of the bar code, which is optionally selected, and a blank space; and it is necessary that this boundary line is accurately kept in place during composition. For that purpose, it is necessary to eliminate the backlash between the feed pawls of the feed drum 111 and the perforations of the film. The backlash can be eliminated by applying the torque motor 5 shown in Fig. 4, which is described in the item of the printing means using the dot image generation method, to this embodiment.

When the conventional means is used, for printing bar codes representing the product kind and frame numbers, 1280 types of negative or positive films are required. When the means of the present invention is used, however, the number of required types of films is reduced to 96, providing easy handling and management.

In this embodiment, the product kind and frame bar code is divided into 2 codes. However, it can be divided into three or more independent bar codes for processing. Also in this case, only a small number of negative or positive film types are required.

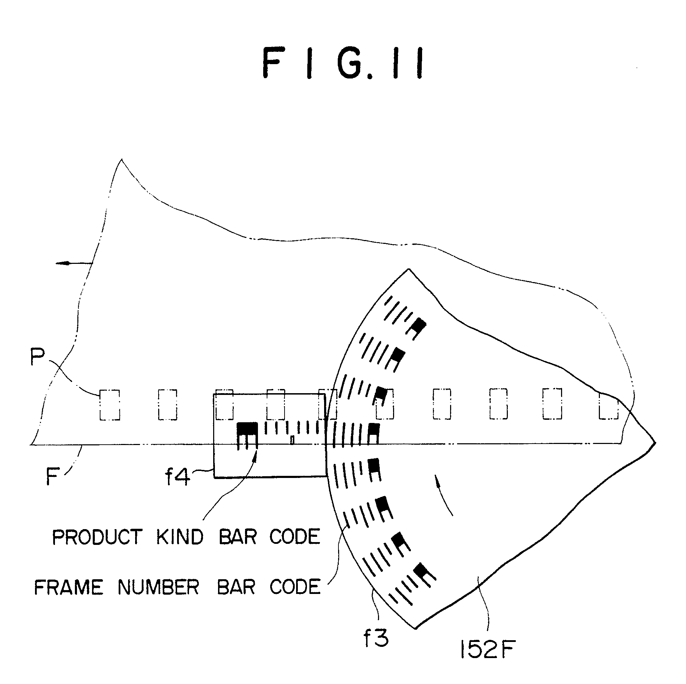

In this embodiment, two divided negative or positive films are set at different locations for composing bar codes. A means used for another embodiment shown in Fig. 11 may be used.

In the figure, a negative or positive film with a bar code of the product kind code representing the start, maker name, and product name is fixed as a 1st divided film f4 so as to print it on the outer edge of the film F which is properly transferred, and a negative or positive film with a bar code representing the frame number, parity, and stop is fixed as a 2nd divided film f3, and about 80, 50, or 30 types of bar codes are arranged on the periphery of a printer disk 152F at an equal pitch. When the disk 152F is rotated properly and both divided bar codes are arranged on the outer edges of the film F, the stroboscopic lamp emits light and each bar code is printed on the film F.

A signal from the counter 160 is supplied for each roll film (the length of one roll film of 12, 24, or 36 exposures) to a 1-revolution motor 148 of a notcher 140. When a ram 142, which fixes a upper blade 142A via a crank 147, a crank rod 144, and crank pins 145 and 146, slides up and down within a column 141, the upper blade engages with a lower blade 143, and a length measurement notch 103 is formed on the edge of the film F which is stopped because a feed amount of one unit length is detected.

When the notcher 140 uses a rotary cutter, a length measurement notch is formed continuously on the film edge unless the film is not stopped.

Instead of this notch processing, a laser mark may be used or a mark may be printed. However, the laser mark or the printed mark is required to be searched for by the operator in a dark room. This method is slightly inconvenient compared with a mark of a length measurement notch 103, but can be used.

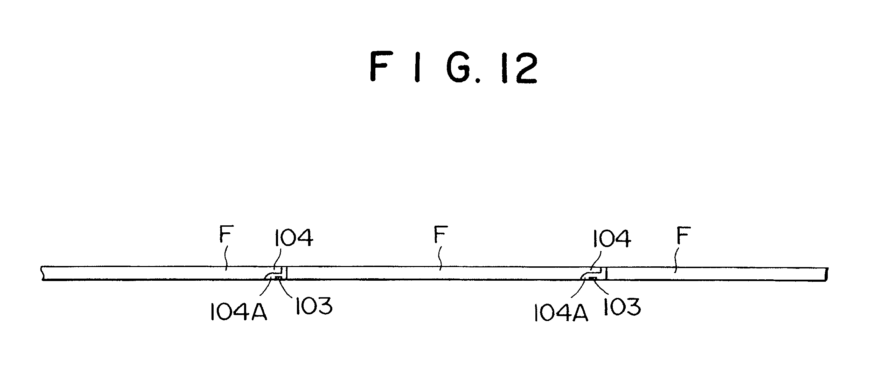

Since each length measurement notch 103, which is formed, as shown in Fig. 12, on a photographic film F at the cutting location for each unit film, is formed in an area 104A which corresponds to a tongue tip 104 formed on each film and is cut off, no length measurement notches remain in the film. It is possible that the guide roller 112 is made movable instead of fixed, and used to adjust the path length of the film between the notcher 140 and the printer and also the relation between the notch and printing locations. Perforations are omitted in Fig. 12.

When the distance between the character and symbol printing location (e.g. around 131 in Fig. 9-(a))on the film and the length measurement notch processing location(e.g. around 143 in Fig. 9(a)) is a multiple of the length of one roll film, a phenomenon that the light source emits light many times can happen because unnecessary vibration of the film is detected during the length measurement notch processing and the suspension of the film conveyance. However, during the notch processing for printing control which requires no characters, there is no bar code to be exposed on the film, and the negative or positive film may function as a mask. By doing this, default exposure can be prevented, even if multiple light emission occur.

The notcher 140 is installed, as shown in Figs. 9(a) and 9(b), on the upstream side from the character and symbol printer in this embodiment. However, it may be installed on the downstream side.

By using the present invention, when color print hard copy is produced from a developed photographic film, the corresponding frame numbers are printed correctly and surely on the back of the hard copy, and the orderer or order receiver can specify picture planes surely, easily, efficiently, and readily for reprinting.

Moreover, when bar codes containing the product kind (maker and product names included) and frame numbers are printed on the outer edges of a photographic film according to the present invention, the number of types of negative or positive films to be prepared can be extremely reduced by using negative or positive films of each bar code which is divided into a product kind code and a frame number code. By doing this, the switching time, negative or positive film management manhour, and production cost can be greatly reduced.

When the dot image generation method is used, the storage capacity of a memory such as a RAM for storing divided bar codes can be extremely reduced, providing a compact and simplified apparatus and a remarkable reduction in cost.

Each frame number can be read surely and correctly without disturbed by side notches, and can be surely printed on the back of each hard copy. Thus, the picture frame can be specified by the orderer or order receiver simply, surely, easily, efficiently, and readily.

**Claims**

1. A silver halide photographic light-sensitive material, comprising;
a first latent code image, exposed on at least one of outer edge ares of said silver halide photographic light-sensitive material, for identifying a product kind thereof,
a photographic part of said silver halide photographic light-sensitive material for exposing a plurality of picture flames in a longitudinal direction, and
a second latent code image, for identifying said picture flames on both of said outer edge areas,
wherein said outer edge areas are outside of said picture flames on said silver halide photographic light-sensitive material in said longitudinal direction.

2. A material claimed in claim 1,
wherein said first latent code image and said second latent code image are composed that one respective pattern thereof identifies one numeral code.

3. A method of forming an identification code on a silver halide photographic light-sensitive material, comprising the steps of:
exposing a latent code image on said silver halide photographic light-sensitive material at an outer edge area thereof,
wherein a means for exposing said code comprises a dot-image exposing means and a exposing area of said dot-image exposing means extends beyond a side edge of said silver halide photographic light-sensitive material.

4. A method of forming an identification code on a silver halide photographic light-sensitive material, comprising the steps of:
exposing a latent code image on said silver halide photographic light-sensitive material at an outer edge area thereof,
wherein a means for exposing said code comprises at least one of a negative-film pattern and a positive-film pattern, and a exposing area of at least said one of said negative-film pattern and said positive-film pattern extends beyond a side edge of said silver halide photographic light-sensitive material.

5. A method of forming an identification code on a silver halide photographic light-sensitive material, comprising the steps of:
exposing a first latent code image for identifying a product kind of said silver halide photographic light-sensitive material, on at least one of outer edge areas thereof,
exposing a second latent code image for identifying a plurality of picture flames, on both of said outer edge areas of said silver halide photographic light-sensitive material, wherein said plurality of picture flames are exposed in a photographic area of said silver halide photographic light-sensitive material in a longitudinal direction,
wherein a means for exposing said first latent code image and said second latent code image comprises at least one of a negative-film pattern and a positive-film pattern, and a exposing area of said one of said negative-film pattern and said positive-film pattern extends beyond a side edge of said silver halide photographic light-sensitive material.

6. An apparatus for forming an identification latent bar code image on a silver halide photographic light-sensitive material, comprising:
means for forming said latent bar code image, wherein at least one of a negative-film pattern and a positive-film pattern is irradiated to expose said latent bar code image onto said silver halide photographic light-sensitive material,
wherein said one of said negative-film pattern and said positive-film pattern is composed of a plurality of information sections, and said information sections are connected at an edge between a bar and a space of said latent bar code image.

7. The apparatus claimed in Claim 6,
wherein said information sections identify a maker,a product kind including a product name, and a flame number.

8. An apparatus for forming an identification latent bar code image on a silver halide photographic light-sensitive material, comprising:
means for storing a irradiation position data,
means for generating a dot-image irradiation so that said latent bar code image is formed on said silver halide photographic light-sensitive material according to said irradiation position data,
wherein said dot-image irradiation is composed of a plurality of information sections, and said information sections are connected at an edge between a bar and a space of said latent bar code image, and
means for storing a plurality of data representing said information sections.

# F I G. I

FRAME NUMBER IDENTIFICATION CODE
(FRAME NUMBER BAR CODE)

PRODUCT KIND AND FRAME NUMBER
IDENTIFICATION CODE

FRAME NUMBER

EP 0 416 519 A2

# F I G. 2 (a)

| FRAME NUMBER | BAR SECTION | SPACE SECTION | PATTERN |
|---|---|---|---|
| 00 | 1:00000:0 | 0:0111:0 | |
| 00A | 1:00000:0 | 0:1011:0 | |
| 0 | 1:11000:0 | 0:0001:0 | |
| 0A | 1:10100:0 | 0:0001:0 | |
| 1 | 1:01100:0 | 0:0001:0 | |
| 1A | 1:10010:0 | 0:0001:0 | |
| 2 | 1:01010:0 | 0:0001:0 | |
| 2A | 1:00110:0 | 0:0001:0 | |
| 3 | 1:11000:0 | 0:0010:0 | |
| 3A | 1:10100:0 | 0:0010:0 | |
| 4 | 1:01100:0 | 0:0010:0 | |
| 4A | 1:11000:0 | 0:0100:0 | |
| 5 | 1:11000:0 | 0:1000:0 | |
| 5A | 1:10100:0 | 0:0100:0 | |
| 6 | 1:01100:0 | 0:0100:0 | |
| 6A | 1:10100:0 | 0:1000:0 | |
| 7 | 1:01100:0 | 0:1000:0 | |
| 7A | 1:10010:0 | 0:0010:0 | |
| 8 | 1:01010:0 | 0:0010:0 | |
| 8A | 1:00110:0 | 0:0010:0 | |
| 9 | 1:10010:0 | 0:0100:0 | |
| 9A | 1:01010:0 | 0:0100:0 | |
| 10 | 1:10010:0 | 0:1000:0 | |
| 10A | 1:01010:0 | 0:1000:0 | |

not applicable

# F I G. 2(b)

| FRAME NUMBER | BAR SECTION | SPACE SECTION | PATTERN |
|---|---|---|---|
| 11 | 1:00110:0 | 0:0100:0 | |
| 11A | 1:00110:0 | 0:1000:0 | |
| 12 | 1:10001:0 | 0:0001:0 | |
| 12A | 1:01001:0 | 0:0001:0 | |
| 13 | 1:00101:0 | 0:0001:0 | |
| 13A | 1:00011:0 | 0:0001:0 | |
| 14 | 1:10001:0 | 0:0010:0 | |
| 14A | 1:01001:0 | 0:0010:0 | |
| 15 | 1:00101:0 | 0:0010:0 | |
| 15A | 1:10001:0 | 0:0100:0 | |
| 16 | 1:01001:0 | 0:0100:0 | |
| 16A | 1:10001:0 | 0:1000:0 | |
| 17 | 1:01001:0 | 0:1000:0 | |
| 17A | 1:00101:0 | 0:0100:0 | |
| 18 | 1:00101:0 | 0:1000:0 | |
| 18A | 1:00011:0 | 0:0010:0 | |
| 19 | 1:00011:0 | 0:0100:0 | |
| 19A | 1:00011:0 | 0:1000:0 | |
| 20 | 1:10000:0 | 0:0011:0 | |
| 20A | 1:01000:0 | 0:0011:0 | |
| 21 | 1:00100:0 | 0:0011:0 | |
| 21A | 1:10000:0 | 0:0101:0 | |
| 22 | 1:01000:0 | 0:0101:0 | |
| 22A | 1:10000:0 | 0:1001:0 | |

12

# F I G. 2(c)

| FRAME NUMBER | BAR SECTION | SPACE SECTION | PATTERN |
|---|---|---|---|
| 23 | I:01000:0 | 0:1001:0 | |
| 23A | I:00100:0 | 0:0101:0 | |
| 24 | I:00100:0 | 0:1001:0 | |
| 24A | I:00010:0 | 0:0011:0 | |
| 25 | I:00010:0 | 0:0101:0 | |
| 25A | I:00010:0 | 0:1001:0 | |
| 26 | I:10000:0 | 0:0110:0 | |
| 26A | I:01000:0 | 0:0110:0 | |
| 27 | I:10000:0 | 0:1010:0 | |
| 27A | I:01000:0 | 0:1010:0 | |
| 28 | I:00100:0 | 0:0110:0 | |
| 28A | I:00100:0 | 0:1010:0 | |
| 29 | I:10000:0 | 0:1100:0 | |
| 29A | I:01000:0 | 0:1100:0 | |
| 30 | I:00100:0 | 0:1100:0 | |
| 30A | I:00010:0 | 0:0110:0 | |
| 31 | I:00010:0 | 0:1010:0 | |
| 31A | I:00010:0 | 0:1100:0 | |
| 32 | I:00001:0 | 0:0011:0 | |
| 32A | I:00001:0 | 0:0101:0 | |
| 33 | I:00001:0 | 0:1001:0 | |
| 33A | I:00001:0 | 0:0110:0 | |
| 34 | I:00001:0 | 0:1010:0 | |
| 34A | I:00001:0 | 0:1100:0 | |

# F I G. 2(d)

| FRAME NUMBER | BAR SECTION | SPACE SECTION | PATTERN |
|---|---|---|---|
| 35 | 1:11100:0 | 0:0000:0 | |
| 35A | 1:11010:0 | 0:0000:0 | |
| 36 | 1:10110:0 | 0:0000:0 | |
| 36A | 1:01110:0 | 0:0000:0 | |
| E | 1:00000:0 | 0:1110:0 | |

FOR 36-EXPOSURE FILM

# F I G. 2(e)

| FRAME NUMBER | BAR SECTION | SPACE SECTION | PATTERN | REMARKS |
|---|---|---|---|---|
| 12 | 1:11001:0 | 0:0000:0 | | ONLY FOR 12-EXPOSURE FILM |
| 12A | 1:10101:0 | 0:0000:0 | | |
| 20 | 1:01101:0 | 0:0000:0 | | ONLY FOR 20-EXPOSURE FILM |
| 20A | 1:10011:0 | 0:0000:0 | | |
| 24 | 1:01011:0 | 0:0000:0 | | ONLY FOR 24-EXPOSURE FILM |
| 24A | 1:00111:0 | 0:0000:0 | | |

# F I G. 3(a)

FILM NUMBER

START CODE

MAKER NAME

PRODUCT KIND

PARITY

STOP CODE

# F I G. 3(b)

P

F

fl, f2 OR DOT IMAGE BAR

EXPOSED BAR

FILM EDGE LINE

15

# F I G. 4

# F I G. 5

# F I G. 6(a)

# F I G. 6(b)

| | | | | | | | | | | | |
|---|---|---|---|---|---|---|---|---|---|---|---|
| O | O | I | O | O | O | O | O | I | O | O | O |
| O | O | I | O | O | O | O | I | I | O | O | O |
| O | O | I | O | O | O | I | O | I | O | O | O |
| O | O | I | O | O | I | O | O | I | O | O | O |
| O | O | I | O | I | I | I | I | I | I | O | O |
| O | O | I | O | O | O | O | O | I | O | O | O |
| O | O | I | O | O | O | O | O | I | O | O | O |

DATA LINE NUMBER

ADDRESS

# F I G. 7

ENCODER PULSE

EMISSION COMMAND PULSE

DATA PREPARATION PULSE

# F I G. 8

# F I G. 9(a)

EP 0 416 519 A2

F I G. 9(b)

F I G. IO(a)

# F I G. 10(b)

EP 0 416 519 A2

# F I G. IO(c)

# F I G. 11

P

F

f4

PRODUCT KIND BAR CODE

FRAME NUMBER BAR CODE

f3

152F

# F I G. I2